# EUROPEAN PATENT SPECIFICATION

(11) **EP 2 229 989 B1**
(45) Date of publication and mention of the grant of the patent: **17.10.2012**
(21) Application number: 10156832.7
(22) Date of filing: 18.03.2010
(51) Int. Cl.: B01D 17/02

(54) **Device with concentric channels for separating a fluid into fractions by means of centrifugal force**
Vorrichtung mit konzentrischen Kanälen zum Trennen von Flüssigkeiten in Fraktionen mittels Zentrifugalkraft
Dispositif avec canaux concentriques pour séparer un fluide entre fractions au moyen d'une force centrifuge

(30) Priority: 19.03.2009 NL 2002642
(43) Date of publication of application: 22.09.2010
(73) Proprietor: Taxon B.V., Willemstad, Curaçao (AN)
(72) Inventor: Swanborn, Rombout Adriaan, 6861 WK Oosterbeek (NL)
(74) Representative: Van den Heuvel, Henricus Theodorus

(56) References cited:
- WO-A-2009/031905
- AU-B2- 523 461
- GB-A- 783 173
- GB-A- 883 713
- US-A- 3 805 495
- US-A- 5 466 384

## Description

The invention relates to a device for separating a flowing fluid into at least two fractions with differing mass density, comprising: a substantially cylindrical channel; helical baffles arranged in the channel for imparting a movement component with a tangential direction to the fluid flowing through the channel; and first and second discharge means connecting to the channel for separate discharge of the fractions with differing mass density separated from the fluid as a result of the centrifugal action of the movement component in tangential direction. The invention also relates to a method for separating a flowing fluid into at least two fractions with differing mass density, comprising of: carrying the fluid for separating into fractions in axial direction through a substantially cylindrical channel, and imparting a tangential movement component to the fluid flowing through the channel, and separately discharging the fractions with differing mass density separated from the fluid as a result of the centrifugal action of the movement component in tangential direction.

Such a device and method are generally known. They operate well for the purpose of separating fluids into fractions with differing density, such as water and oil. During the separation process at least a fraction of the particles is displaced in radial direction in order to thus form the fractions with differing mass density. In order to obtain the fullest possible separation, sufficiently long residence times must be created to allow sufficient migration of the individual particles. This results (also subject to diverse process parameters) in a determined minimum channel length. The longer the minimum channel length, the longer the device and the higher the minimum pressure required to cause movement of the fluid through the channel.

The invention has for its object to provide a device of the type stated in the preamble, wherein the channel is divided into at least two concentric subchannels, helical baffles are arranged in each of the subchannels and the first and second discharge means are adapted for individual discharge from each of the subchannels of the fractions separated from the fluid. Through the use of concentric channels the width of the channels is greatly reduced, so that the distance which the particles for separating have to cover (the maximum migration distance in radial direction of the channel) is correspondingly reduced. The minimum residence time of the fluid in the device required to arrive at a determined separation result is hereby reduced or, when the length remains the same, the degree of separation can be improved. The construction length of a separating device of the type stated in the preamble can thus be reduced as a result of the present invention, and this results in material-saving, simplifies production, transport and installation, and sets fewer requirements in respect of the construction location of the separating device. Another advantage is that when the construction length of the separating device remains the same as in the prior art (or even also when there is a limited reduction in the construction length of the separating device) an improved separating result can be obtained. It is also noted here that the capacity of the device according to the invention hardly decreases, or does not decrease at all, relative to a prior art device, because the passage decreases only minimally as a consequence of the placing of a wall between the subchannels. For the purpose of causing flow of the fluid through the separating device, means will connect to the separating device (generally on the upstream side) for the purpose of causing initial flow in axial direction in the channel of the fluid for separating into fractions.

The invention also provides a method for separating a flowing fluid into at least two fractions with differing mass density of the type stated in the preamble, wherein the fluid is guided through at least two concentric subchannels, wherein a movement component with a tangential direction is imparted to the fluid in each of the subchannels and wherein the separated fractions with differing mass density are discharged separately from each of the subchannels. For the advantages of applying this method reference is made to the above stated advantages of the device according to the present invention.

Although it is possible in principle to make use of two subchannels, four subchannels or even more subchannels, it has been found that a separating device with three subchannels has very favourable results.

The centrifugal forces depend to a large extent on the size of the particles and the diameter of the device, so that the forces, and thereby the separating capacity, are greater at a shorter distance from the axis of the cylindrical channel than at a greater distance from the axis of the cylindrical channel.

An embodiment which is technically easy to manufacture is obtained when the pitch of the helical baffles is the same in each of the subchannels.

Because the forces exerted on the fractions for separating differ in the different subchannels, also as a result of the fact that the distances from the diameter vary, it can be attractive to take these variations into account such that the pitch of the helical baffles is mutually differing in the subchannels.

In order to achieve that the separating capacity in each of the channels is as far as possible the same, it is attractive for the pitch of the helical baffles in the subchannels to be dimensioned such that the same centrifugal force is generated in each of the subchannels.

In some situations, for instance in the case of a large pitch, it is attractive for a multiple helix to be described through the baffles, or for at least one of the subchannels to be provided with at least two baffles extending along a helix. A baffle will usually be embodied as a helically connected (single) wall panel. When a multiple helix is applied, two (or more) helices can be intertwined.

According to yet another embodiment, the pitch of the helical baffles in the subchannels decreases in the flow direction. This embodiment has a positive effect on the stability of the system and accelerates the fluid. It is however also possible for the pitch of the helical baffles in the subchannels to increase in the flow direction. The pressure drop hereby decreases.

The first discharge means for discharging the lighter fraction preferably comprise openings arranged in the walls of the subchannels located on the inner side. In the downstream part of the subchannels the fluid is separated into two different fractions situated respectively on the inner side (lighter fraction) and on the outer side (heavier fraction) of the subchannels. The above stated embodiment makes use of this.

A structurally attractive embodiment is obtained when the first discharge means for discharging the lighter fraction comprise at least one discharge channel which connects to the openings in the walls of the subchannels located on the inner side. This can for instance be embodied such that the openings in the walls are separated by auxiliary walls placed offset relative to the walls of the subchannels and connecting thereto. If openings are located only in the inner wall of the subchannels, this implies that the other fraction is discharged via the continuation of said subchannel. The second discharge means for discharging the heavier fraction can for instance connect downstream of the openings to the different subchannels. As a variant, it is also possible for openings to be located only in the outer wall of a subchannel, whereby specifically the heavier fraction will be discharged.

Because the discharge means coupled to each subchannel each deliver both fractions, it is attractive that the discharge means for identical fractions with the same properties are combined. The discharge means are preferably adapted for this purpose to combine fractions with corresponding properties coming from different subchannels.

In order to maintain the desired flow pattern as far as possible, it is attractive for elements to be placed in the subchannels for the purpose of preventing turbulences. For the purpose of obtaining desired changing passages in the subchannels, it is attractive for at least one of the walls between two subchannels to take an at least partially conical form.

In order to implement a specifically desired dimensioning, such as for instance to obtain a differing passage per subchannel, the width of the subchannels can also be chosen differently from each other. A more specific example hereof is that the width of the subchannels decreases in radial direction.

The invention will be further elucidated on the basis of the non-limitative exemplary embodiments shown in the following figures. Herein:
figure 1 is a partially broken-away perspective view of a prior art separating device;
figure 2 is a partially broken-away perspective view of a separating device according to a first embodiment of the invention;
figure 3 is a partially broken-away perspective view of a separating device according to a second embodiment of the invention;
figure 4 is a partially broken-away perspective view of a separating device according to a third embodiment of the invention; and
figure 5 is a partially broken-away perspective view of a separating device according to a fourth embodiment of the invention.

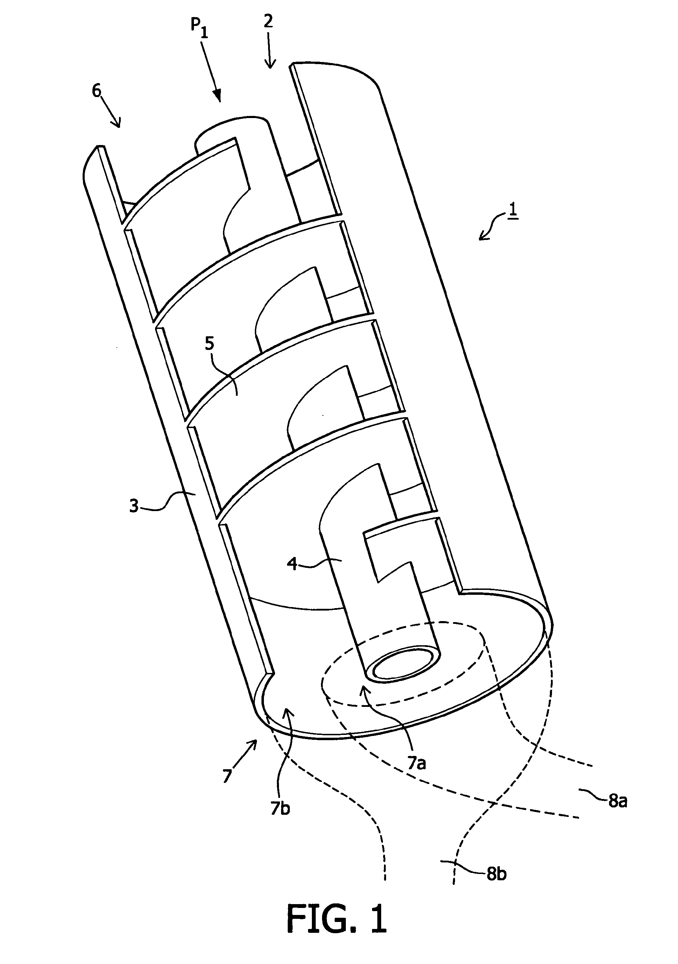

Figure 1 shows a device, designated in its entirety with 1, for separating fractions from a fluid flowing through device 1. Device 1 comprises a cylindrical channel 2 enclosed by a wall 3 in the form of a cylinder jacket. An internal tube 4 is place concentrically with wall 3 in the form of a cylinder jacket. A helical baffle 5 also extends between internal tube 4 and wall 3 in the form of a cylinder jacket. On its top side the cylindrical channel 2 begins with an infeed opening 6 and on its bottom side the cylindrical channel ends with an outfeed opening 7. This outfeed opening 7 comprises a centrally located part 7a and a part 7b located on the outer side, both of which are connected to respective separate discharge channels 8a and 8b.

The feed of the fluid for separating takes place as according to arrow P₁, for instance through the agency of a pump not shown in this figure. The fluid for separating enters cylindrical channel 2 through infeed opening 6 and is subjected to a tangential force, and thereby to a circular movement. As a result the fluid is subjected to a separating force so that the fraction of the fluid with a high mass density collects on the outer part of channel 2, against the wall 3 in the form of a cylinder jacket, and the light fraction of the fluid collects on the inner part of channel 2, against central tube 4. The lighter fraction will therefore exit through the centrally located part 7a of outfeed opening 7 and the heavy fraction will exit through the outlying part 7b of outfeed opening 7. The two separated fractions thus enter the separate discharge channels 8a, 8b respectively. It is noted that the separation of the fractions is understood to mean the at least partial separation of two fractions such that a significant difference in the average mass density of the two fractions results; a complete (100%) separation will be difficult or impossible to realize.

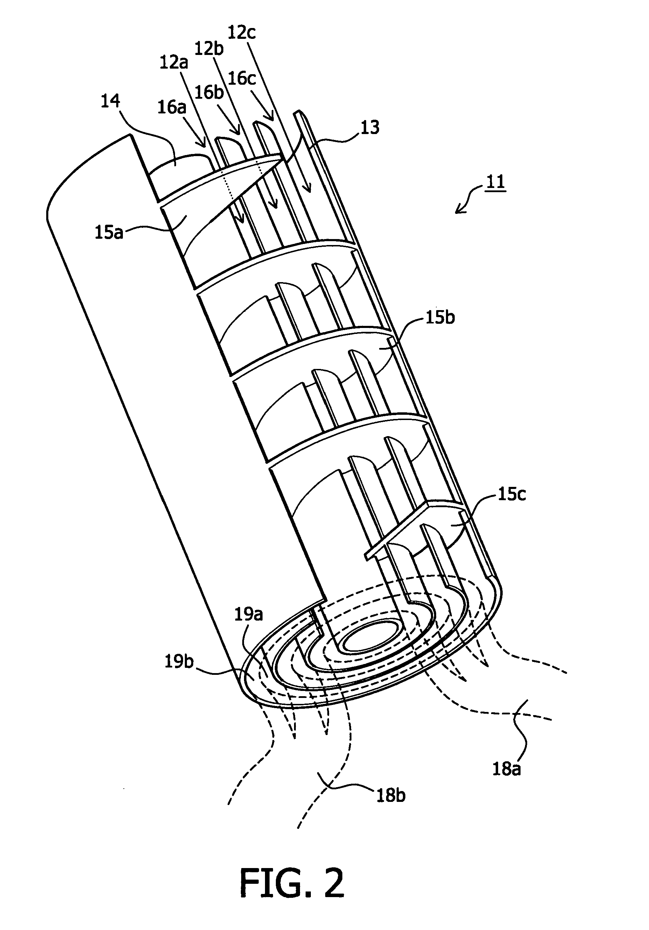

The first embodiment of separating device 11 according to the present invention shown in figure 2 comprises a wall 13 in the form of a cylinder jacket inside which subchannels 12a, 12b and 12c extend concentrically and in the axial direction, as does a central tube 14. Subchannels 12a, 12b and 12c are separated by intermediate walls 19a, 19b. A helical baffle 15a, 15b and 15c extends in each of the respective subchannels 12a, 12b and 12c. All these helical baffles 15a, 15b and 15c have the same pitch, so that this embodiment can be produced easily. Because the width of subchannels 12a, 12b and 12c is less than a third of that of the channel in the prior art device of figure 1, for an adequate separation of the fluid the particles need only be displaced over a substantially shorter distance than the particles in prior art device 1 as shown in figure 1. The device can therefore be embodied with a considerably shorter construction length in order to achieve the same separation effect. An improved separation effect can otherwise be obtained if the construction length remains the same.

In this embodiment the fluid for separating also enters device 11 via respective infeed openings 16a, 16b and 16c which lead to the respective subchannels 12a, 12b and 12c. During passage through subchannels 12a, 12b and 12c separation of the fluid into a heavy and a lighter fraction takes place in principle in the same manner as in the prior art, wherein the heavy fraction is always located on the outer side of subchannel 12a, 12b and 12c and the light fraction on the inner side of subchannel 12a, 12b and 12c. Provided for this purpose are discharge means 18a, 18b, shown schematically in the drawing, which combine the fractions of the same type from each of the subchannels 12a, 12b and 12c. For this purpose the discharge means for heavy fraction 18b are connected in each case to the outer side of the discharge opening of subchannels 12a, 12b and 12c, while the inner side of each of subchannels 12a, 12b and 12c is connected in each case to the discharge means for light fraction 18a.

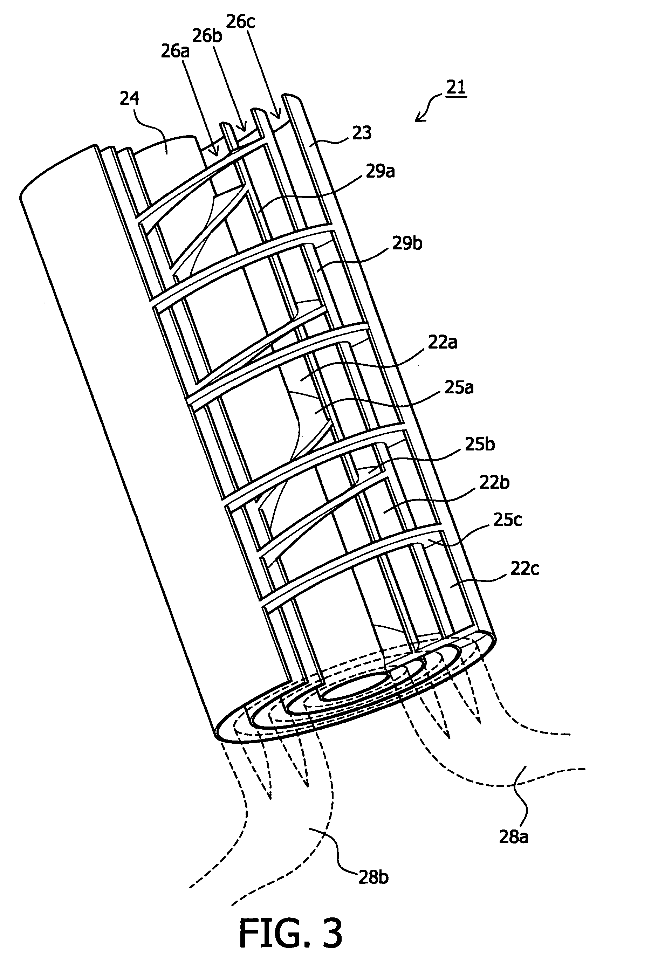

Figure 3 shows an embodiment of a separating device 21 according to the present invention which corresponds to the embodiment shown in figure 2, except that the pitch of helical baffles 25a, 25b, 25c in subchannels 22a, 22b, 22c is different in each case. This embodiment relates to a separating device 21 comprising a wall 23 in the form of a cylinder jacket, inside which subchannels 22a, 22b, 22c extend concentrically and in axial direction, as does a central tube 24. Subchannels 22a, 22b, 22c are separated by intermediate walls 29a, 29b. A helical baffle 25a, 25b, 25c extends in each of the respective subchannels 22a, 22b, 22c. The helical baffle 25c situated in outer subchannel 22c thus has a smaller pitch than helical baffle 25b situated in the middle subchannel 22b. Helical baffle 25a situated in the innermost subchannel 22a has a larger pitch than helical baffle 25b situated in the middle subchannel 22b. As a result of these differences in pitch a mutually differing movement component in tangential direction is imparted to the fluid flowing through the relevant subchannels 22a, 22b, 22c, which can be useful in achieving specific separating effects. An important reason is also to compensate for the different diameters of subchannels 22a, 22b, 22c. The average radius of curvature of the innermost subchannel 22a is considerably smaller than the radius of curvature of the outer subchannel 22c. The centrifugal forces to which the fluid is subjected in the innermost subchannel 22a are therefore much smaller than those to which the fluid in outer subchannel 22c are subjected. This difference in force, and therefore a difference in separating capacity, can be compensated by increasing the rotation speed of the fluid in outer subchannel 22c. Such a change in the rotation speed can be obtained by changing the pitch of the helical baffle 25a received in the relevant subchannel 22a.

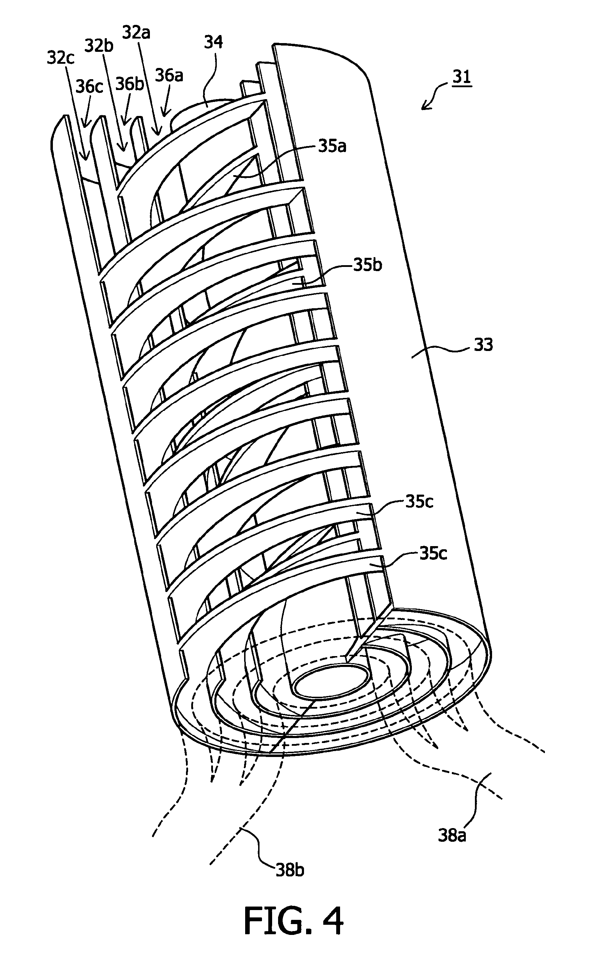

Figure 4 shows an embodiment of a separating device 31 according to the present invention, wherein two helical baffles 35c are placed in one of the subchannels, i.e. outer subchannel 32c, this in a manner similar to a double helix. This is particularly applicable in the case of helical baffles in a subchannel with a large diameter so as to prevent the distance between the baffles becoming too great in axial direction. This embodiment otherwise corresponds to separating device 21 as shown in figure 3, wherein it is pointed out that the reference numerals in figure 4 are increased by 10 relative to the corresponding components in figure 3.

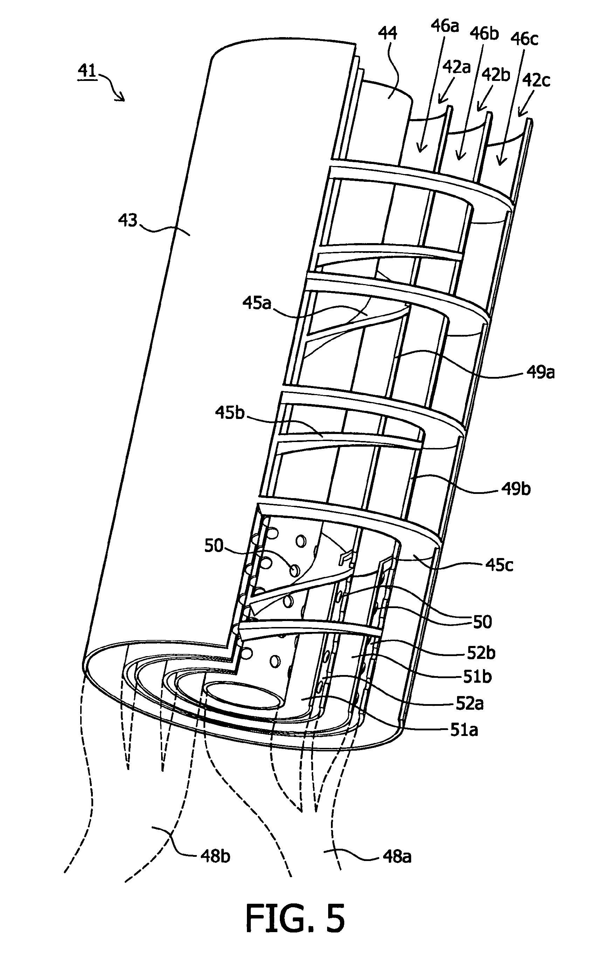

The discharge means are only shown schematically in the above embodiments. Figure 5 shows an embodiment of a separating device 41 according to the present invention in which a structural embodiment of the discharge means is illustrated. The reference numerals in this figure are also increased by 10 relative to the corresponding components in figure 4.

The discharge means comprise in the first instance holes 50 formed in the downstream part of intermediate walls 49a, 49b and the wall of the internal cylinder 44. Also arranged in the innermost subchannel 42a is a substantially cylindrical separating wall 51a which connects to intermediate wall 49a, this above that part thereof in which openings 50 are arranged, whereby a discharge chamber 52 a is formed between intermediate wall 49a and separating wall 51a. Likewise arranged in the innermost subchannel 42b is a substantially cylindrical separating wall 51b which connects to intermediate wall 49b, this above that part thereof in which openings 50 are arranged, whereby a discharge chamber 52b is formed between intermediate wall 49b and separating wall 51b.

The holes formed in the downstream part of intermediate walls 49a, 49b and the wall of internal cylinder 44 serve to discharge the light fraction from the main flow of the fluid flowing through subchannels 42a, 42b and 42c. Said openings 50 are after all always arranged in the inner wall of said subchannel 42a, 42b, 42c. This light fraction enters the interior of the cylinders from the inner subchannel 42a through the openings 50 arranged in the wall of tube 44, from which interior it can be discharged. The light fraction from middle subchannel 42b thus enters discharge chamber 52a and the light fraction from outermost subchannel 42c thus enters discharge chamber 52b. Discharge chambers 52a, 52b and the interior of tube 44 are together connected to a schematically shown shared discharge channel 48a for the light fraction. The underside of subchannels 42a, 42b, 42c is connected to a schematically shown shared discharge channel for the heavy fraction.

It will be apparent that within the scope of the invention diverse modifications can be made to the above shown embodiments. The number of subchannels can thus equal two or be greater than three. It is also possible to adapt the pitch of the diverse helical baffles to the situation. It is likewise possible for the subchannels to have differing widths. The baffles can extend over the whole width of the subchannels, or only over a part thereof.

## Claims

1. Device for separating a flowing fluid into at least two fractions with differing mass density, comprising:
- a substantially cylindrical channel;
- helical baffles arranged in the channel for imparting a movement component with a tangential direction to the fluid flowing through the channel; and
- first and second discharge means connecting to the channel for separate discharge of the fractions with differing mass density separated from the fluid as a result of the centrifugal action of the movement component in tangential direction,
**characterized in that** the channel is divided into at least two concentric subchannels, that helical baffles are arranged in each of the subchannels and that the first and second discharge means are adapted for individual discharge from each of the subchannels of the fractions separated from the fluid.

2. Device as claimed in claim 1, **characterized in that** the channel is divided into three concentric subchannels.

3. Device as claimed in claim 1 or 2, **characterized in that** the concentric channels extend around a central core.

4. Device as claimed in claim 1, 2 or 3, **characterized in that** the pitch of the helical baffles is the same in each of the subchannels.

5. Device as claimed in claim 1, 2 or 3, **characterized in that** the pitch of the helical baffles is mutually differing in the subchannels.

6. Device as claimed in claim 5, **characterized in that** the pitch of the helical baffles in the subchannels is dimensioned for the purpose of generating the same centrifugal force in each of the subchannels.

7. Device as claimed in any of the foregoing claims, **characterized in that** at least one of the subchannels is provided with at least two baffles extending along a helix.

8. Device as claimed in any of the foregoing claims, **characterized in that** the pitch of the helical baffles in the subchannels decreases in the flow direction.

9. Device as claimed in any of the claims 1-7, **characterized in that** the pitch of the helical baffles in the subchannels increases in the flow direction.

10. Device as claimed in any of the foregoing claims, **characterized in that** the first discharge means for discharging the lighter fraction comprise openings arranged in the walls of the subchannels located on the inner side.

11. Device as claimed in claim 10, **characterized in that** the first discharge means for discharging the lighter fraction comprise at least one discharge channel which connects to the openings in the walls of the subchannels located on the inner side.

12. Device as claimed in claim 10 or 11, **characterized in that** the second discharge means for discharging the heavier fraction connect downstream of the openings to the different subchannels.

13. Device as claimed in any of the foregoing claims, **characterized in that** elements are placed in the subchannels for the purpose of preventing turbulences.

14. Device as claimed in any of the foregoing claims, **characterized in that** at least one of the walls between two subchannels takes an at least partially conical form.

15. Device as claimed in any of the foregoing claims, **characterized in that** the width of the subchannels is mutually differing.

16. Device as claimed in claim 15, **characterized in that** the width of the subchannels decreases in radial direction.

17. Method for separating a flowing fluid into at least two fractions with differing mass density, comprising of:
- carrying the fluid for separating into fractions in axial direction through a substantially cylindrical channel, and
- imparting a tangential movement component to the fluid flowing through the channel, and separately discharging the fractions with differing mass density separated from the fluid as a result of the centrifugal action of the movement component in tangential direction,
**characterized in that** the fluid is guided through at least two concentric subchannels, that a movement component with a tangential direction is imparted to the fluid in each of the subchannels and that the separated fractions with differing mass density are discharged separately from each of the subchannels.

## Patentansprüche

1. Einheit zum Trennen einer fließenden Flüssigkeit in mindestens zwei Teile mit unterschiedlicher Massendichte, die Folgendes umfasst:
- einen im Wesentlichen zylindrischen Kanal;
- in dem Kanal angeordnete spiralförmige Umlenkbleche zum Weitergeben einer Bewegungskomponente mit einer Tangentialrichtung an die durch den Kanal fließende Flüssigkeit; und
- ein erstes und zweites Ableitungsmittel, die mit dem Kanal verbunden sind, um die Teile mit unterschiedlicher Massendichte getrennt abzuleiten, die infolge der Zentrifugalwirkung der Bewegungskomponente in Tangentialrichtung von der Flüssigkeit getrennt werden,
**dadurch gekennzeichnet, dass** der Kanal in mindestens zwei konzentrische Unterkanäle unterteilt ist, dass spiralförmige Umlenkbleche in jedem der Unterkanäle angeordnet sind und dass das erste und zweite Ableitungsmittel geeignet sind, um die von der Flüssigkeit getrennten Teile aus jedem der Unterkanäle individuell abzuleiten.

2. Einheit nach Anspruch 1, **dadurch gekennzeichnet, dass** der Kanal in drei konzentrische Unterkanäle unterteilt ist.

3. Einheit nach Anspruch 1 oder 2, **dadurch gekennzeichnet, dass** sich die konzentrischen Kanäle um einen zentralen Kern erstrecken.

4. Einheit nach Anspruch 1, 2 oder 3, **dadurch gekennzeichnet, dass** die Neigung der spiralförmigen Umlenkbleche in jedem Unterkanal die gleiche ist.

5. Einheit nach Anspruch 1, 2 oder 3, **dadurch gekennzeichnet, dass** die Neigung der spiralförmigen Umlenkbleche sich in den Unterkanälen untereinander unterscheidet.

6. Einheit nach Anspruch 5, **dadurch gekennzeichnet, dass** die Neigung der spiralförmigen Umlenkbleche in den Unterkanälen so bemessen ist, dass in jedem der Unterkanäle die gleiche Zentrifugalkraft erzeugt wird.

7. Einheit nach einem der vorstehenden Ansprüche, **dadurch gekennzeichnet, dass** mindestens einer der Unterkanäle mit mindestens zwei Umlenkblechen versehen ist, die sich entlang einer Spirale erstrecken.

8. Einheit nach einem der vorstehenden Ansprüche, **dadurch gekennzeichnet, dass** sich die Neigung der spiralförmigen Umlenkbleche in den Unterkanälen in Fließrichtung verringert.

9. Einheit nach einem der Ansprüche 1 bis 7, **dadurch gekennzeichnet, dass** sich die Neigung der spiralförmigen Umlenkbleche in den Unterkanälen in Fließrichtung erhöht.

10. Einheit nach einem der vorstehenden Ansprüche, **dadurch gekennzeichnet, dass** das erste Ableitungsmittel zum Ableiten des leichteren Teils Öffnungen umfasst, die in den Wänden der auf der Innenseite befindlichen Unterkanäle angeordnet sind.

11. Einheit nach Anspruch 10, **dadurch gekennzeichnet, dass** das erste Ableitungsmittel zum Ableiten des leichteren Teils mindestens einen Ableitungskanal umfasst, der mit den Öffnungen in den Wänden der auf der Innenseite befindlichen Unterkanäle verbunden ist.

12. Einheit nach Anspruch 10 oder 11, **dadurch gekennzeichnet, dass** das zweite Ableitungsmittel zum Ableiten des schwereren Teils nach den Öffnungen mit den verschiedenen Unterkanälen verbunden ist.

13. Einheit nach einem der vorstehenden Ansprüche, **dadurch gekennzeichnet, dass** Elemente in den Unterkanälen angebracht werden, um Verwirbelungen zu verhindern.

14. Einheit nach einem der vorstehenden Ansprüche, **dadurch gekennzeichnet, dass** mindestens eine der Wände zwischen zwei Unterkanälen eine mindestens teilweise konische Form annimmt.

15. Einheit nach einem der vorstehenden Ansprüche, **dadurch gekennzeichnet, dass** sich die Breite der Unterkanäle gegenseitig unterscheidet.

16. Einheit nach Anspruch 15, **dadurch gekennzeichnet, dass** sich die Breite der Unterkanäle in radialer Richtung verringert.

17. Verfahren zum Trennen einer fließenden Flüssigkeit in mindestens zwei Teile mit unterschiedlicher Massendichte, das Folgendes umfasst:
- Durchleiten der Flüssigkeit zum Trennen in Teile in axialer Richtung durch einen im Wesentlichen zylindrischen Kanal, und
- Weitergeben einer Tangentialbewegungskomponente an die fließende Flüssigkeit durch den Kanal und separates Ableiten der Teile mit unterschiedlicher Massendichte, die infolge der Zentrifugalwirkung der Bewegungskomponente in Tangentialrichtung von der Flüssigkeit getrennt werden,
**dadurch gekennzeichnet, dass** die Flüssigkeit durch mindestens zwei konzentrische Unterkanäle geführt wird, dass eine Bewegungskomponente mit einer Tangentialrichtung an die Flüssigkeit in jedem der Unterkanäle weitergegeben wird und dass die getrennten Teile mit unterschiedlicher Massendichte getrennt von jedem der Unterkanäle abgeleitet werden.

## Revendications

1. Dispositif pour séparer un fluide en écoulement en au moins deux fractions de densité massique différente, comprenant :
- un canal sensiblement cylindrique ;
- des chicanes hélicoïdales agencées dans le canal pour communiquer au fluide s'écoulant dans le canal une composante de mouvement ayant une direction tangentielle, et
- des premiers et seconds moyens d'évacuation se raccordant au canal en vue de l'évacuation séparée des fractions de densité massique différente séparées à partir du fluide à la suite de l'action centrifuge de la composant de mouvement ayant une direction tangentielle,
**caractérisé en ce que** le canal est divisé en au moins deux sous-canaux concentriques, **en ce que** les enceintes hélicoïdales sont agencées dans chacun des sous-canaux et **en ce que** les premiers et seconds moyens d'évacuation sont adaptés à l'évacuation individuelle, à partir de chacun des sous-canaux, des fractions séparées à partir du fluide.

2. Dispositif selon la revendication 1, **caractérisé en ce que** le canal est divisé en trois sous-canaux concentriques.

3. Dispositif selon la revendication 1 ou 2, **caractérisé en ce que** les canaux concentriques se déploient autour d'un noyau central.

4. Dispositif selon la revendication 1, 2 ou 3, **caractérisé en ce que** le pas des chicanes hélicoïdales est le même dans chacun des sous-canaux.

5. Dispositif selon la revendication 1, 2 ou 3, **caractérisé en ce que** le pas des chicanes hélicoïdales est différent d'un sous-canal à l'autre.

6. Dispositif selon la revendication 5, **caractérisé en ce que** le pas des chicanes hélicoïdales dans les sous-canaux est dimensionné dans le but de produire la même force centrifuge dans chacun des sous-canaux.

7. Dispositif selon l'une quelconque des revendications précédentes, **caractérisé en ce qu'**au moins l'un des sous-canaux est pourvu d'au moins deux chicanes se déployant suivant une hélice.

8. Dispositif selon l'une quelconque des revendications précédentes, **caractérisé en ce que** le pas des chicanes hélicoïdales dans les sous-canaux décroît dans le sens d'écoulement.

9. Dispositif selon l'une quelconque des revendications 1-7, **caractérisé en ce que** le pas des chicanes hélicoïdales dans les sous-canaux croît dans le sens d'écoulement.

10. Dispositif selon l'une quelconque des revendications précédentes, **caractérisé en ce que** les premiers moyens d'évacuation destinés à évacuer la fraction la plus légère comprennent des orifices ménagés dans les parois des sous-canaux situés du côté interne.

11. Dispositif selon la revendication 10, **caractérisé en ce que** les premiers moyens d'évacuation destinés à évacuer la fraction la plus légère comprennent au moins un canal d'évacuation qui se raccorde aux orifices des parois des sous-canaux situés sur le côté interne.

12. Dispositif selon la revendication 10 ou 11, **caractérisé en ce que** les seconds moyens d'évacuation destinés à évacuer la fraction la plus lourde se raccordent en aval des orifices aux différents sous-canaux.

13. Dispositif selon l'une quelconque des revendications précédentes, **caractérisé en ce que** des éléments sont placés dans les sous-canaux dans le but d'éviter des turbulences.

14. Dispositif selon l'une quelconque des revendications précédentes, **caractérisé en ce qu'**au moins l'une des parois entre deux sous-canaux prend une forme au moins partiellement conique.

15. Dispositif selon l'une quelconque des revendications précédentes, **caractérisé en ce que** la largeur des sous-canaux diffère de l'un à l'autre.

16. Dispositif selon la revendication 15, **caractérisé en ce que** la largeur des sous-canaux décroît dans le sens radial.

17. Procédé de séparation d'un fluide en écoulement en au moins deux fractions de densité massique différente, consistant :
- à transporter le fluide à séparer en fractions dans une direction axiale dans un canal sensiblement cylindrique, et
- à communiquer au fluide s'écoulant dans le canal une composante de mouvement tangentielle et à évacuer séparément les fractions de densité massique différente séparées à partir du fluide à la suite de l'action centrifuge de la composante de mouvement dans une direction tangentielle,
**caractérisé en ce que** le fluide est guidé dans au moins deux sous-canaux concentriques, **en ce qu'**une composante de mouvement ayant une direction tangentielle est communiquée au fluide dans chacun des sous-canaux et **en ce que** les fractions séparées de densité massique différente sont évacuées séparément de chacun des sous-canaux.
